# EUROPÄISCHE PATENTSCHRIFT

(11) **EP 4 522 834 B1**
(45) Veröffentlichungstag und Bekanntmachung des Hinweises auf die Patenterteilung: **03.06.2026**
(21) Anmeldenummer: 23716171.6
(22) Anmeldetag: 05.04.2023
(51) Int. Cl.: E05D 15/40, E05F 1/10, E05F 15/611

(54) **SYNCHRONISATIONSVORRICHTUNG ZUM BEWEGEN EINES BEWEGBAREN MÖBELTEILES**
SYNCHRONIZATION DEVICE FOR MOVING A MOVABLE FURNITURE PART
DISPOSITIF DE SYNCHRONISATION POUR LE DEPLACEMENT D'UNE PARTIE MOBILE DE MOBILIER

(30) Priorität: 13.05.2022 AT 5008222 U
(43) Veröffentlichungstag der Anmeldung: 19.03.2025
(73) Patentinhaber: JULIUS BLUM GMBH, 6973 Höchst (AT)
(72) Erfinder: BOHLE, Wolfgang, 6840 Götzis (AT); SCHEFFKNECHT, Sarah, 6942 Krumbach (AT)
(74) Vertreter: Torggler & Hofmann Patentanwälte - Innsbruck
(86) Internationale Anmeldenummer: PCT/AT2023/060111
(87) Internationale Veröffentlichungsnummer: WO 2023/215922

(56) Entgegenhaltungen:
- WO-A1-2006/113953
- WO-A1-2013/040611
- WO-A1-2022/082237
- CN-A- 104 116 334
- DE-U1- 202021 101 231

## Beschreibung

Die vorliegende Erfindung bezieht sich auf eine Synchronisationsvorrichtung mit zumindest zwei Antriebsvorrichtungen zum Bewegen eines bewegbaren Möbelteiles und mit wenigstens einer Synchronisationsstange zur Synchronisation der Bewegung der zumindest zwei Antriebsvorrichtungen, wobei ein erster Endbereich der Synchronisationsstange mit einem ersten Drehteil der ersten Antriebsvorrichtung und ein zweiter Endbereich der Synchronisationsstange mit einem zweiten Drehteil der zweiten Antriebsvorrichtung verbindbar ist, wobei wenigstens eine Längenausgleichsvorrichtung vorgesehen ist, durch welche in einem montierten Zustand der Synchronisationsstange ein Spiel in einer Längsrichtung der Synchronisationsstange zwischen den Antriebsvorrichtungen und der Synchronisationsstange zumindest teilweise ausgleichbar ist.

In der WO 2013/040611 A1 ist eine Synchronisationsvorrichtung mit einer Synchronisationsstange zur Synchronisation zweier Antriebsvorrichtungen offenbart. Eine solche Synchronisationsvorrichtung hat den Zweck, dass das bewegbare Möbelteil stets mit einem gleichmäßigen Abstand zu einem Möbelkorpus führbar ist, insbesondere auch dann, wenn das bewegbare Möbelteil durch manuelle Kraftausübung einseitig betätigt wird. Die Synchronisationsstange ist auch dann mit den beiden Antriebsvorrichtungen verbindbar, wenn die beiden Antriebsvorrichtungen bereits an einem Möbelkorpus vormontiert sind. Eine notwendige Voraussetzung für eine optimale Synchronisation ist, dass das in Längsrichtung der Synchronisationsstange auftretende Spiel kompensiert wird. Zu diesem Zweck weist zumindest ein Drehteil der Antriebsvorrichtungen ein gefedertes, an die Stirnseite der Synchronisationsstange anlegbares Anpressteil auf, durch welches das Längsspiel kompensierbar ist. Ein Nachteil dieser Konstruktion besteht darin, dass die Antriebsvorrichtung mit dem gefederten Anpressteil eine relativ voluminöse Bauform aufweist.

WO 2022/082237 A1, WO 2006/113953 A1, CN 104 116 334 A und DE 20 2021 101231 U1 offenbaren jeweils eine Synchronisationsvorrichtung genäss des Oberbegriffs des Anspruchs 1.

Die Aufgabe der vorliegenden Erfindung besteht darin, eine Synchronisationsvorrichtung der eingangs erwähnten Gattung mit einer kompakten Bauweise anzugeben.

Dies wird erfindungsgemäß durch die Merkmale des Anspruchs 1 gelöst. Weitere vorteilhafte Ausführungsbeispiele der vorliegenden Erfindung sind in den abhängigen Ansprüchen definiert.

Gemäß der Erfindung ist vorgesehen, dass zumindest eine der Antriebsvorrichtungen ein Gehäuse aufweist und die Längenausgleichsvorrichtung zumindest bereichsweise in das Gehäuse integriert ist und/oder dass die Längenausgleichsvorrichtung zumindest bereichsweise in die Synchronisationsstange integriert ist.

Mit anderen Worten ist die Längenausgleichsvorrichtung zum Ausgleich eines Längsspiels der Synchronisationsstange in das Gehäuse der Antriebsvorrichtung und/oder in die Synchronisationsstange selbst integriert. Auf diese Weise kann die Antriebsvorrichtung und/oder die Synchronisationsstange kompakter gebaut werden.

Gemäß bevorzugten Ausführungsformen kann vorgesehen sein, dass die Synchronisationsstange
- auch dann mit den Drehteilen der Antriebsvorrichtungen lösbar verbindbar ist, wenn die Antriebsvorrichtungen, insbesondere an einem Möbelkorpus, bereits vormontiert sind, und/oder
- in einem verbundenen Zustand mit den Drehteilen der Antriebsvorrichtungen drehfest verbunden ist, und/oder
- durch die Längenausgleichsvorrichtung zwischen den beiden gegenüberliegenden Drehteilen der beiden Antriebsvorrichtungen mit einer vorgegebenen Haltekraft in Längsrichtung der Synchronisationsstange relativ zu den beiden Drehteilen der Antriebsvorrichtungen vorgespannt und zwischen den beiden Drehteilen in Längsrichtung der Synchronisationsstange spielfrei gehalten ist, und/oder
- längenunveränderlich ausgebildet ist.

Grundsätzlich kann die Synchronisationsvorrichtung überall dort eingesetzt werden, wo eine Drehbewegung zweier Antriebsvorrichtungen zu synchronisieren ist, beispielsweise also auch zur synchronen Auslösung von so genannten Touch-Latch-Vorrichtungen zum Ausstoßen bewegbarer Möbelteile aus der geschlossenen Endlage. Diese Touch-Latch-Funktion ermöglicht das Ausstoßen bewegbarer Möbelteile, indem auf das in der Schließstellung befindliche Möbelteil eine manuelle Druck- oder Zugbelastung ausgeübt wird.

Die Synchronisationsvorrichtung kann zur Synchronisation einer Bewegung von bewegbaren Möbelteilen, insbesondere Türen, Klappen oder Schubladen, oder auch zur Synchronisation einer Bewegung von anderen bewegbaren Elementen, beispielsweise Fenstern, eingesetzt werden.

Weitere Einzelheiten und Vorteile der vorliegenden Erfindung ergeben sich aus der nachfolgenden Figurenbeschreibung.
- Fig. 1a, 1b: zeigen ein Möbel mit einem bewegbaren Möbelteil in Form einer hochbewegbaren Klappe sowie die am Möbel zu montierende Synchronisationsvorrichtung in perspektivischen Darstellungen,
- Fig. 2a-2d: zeigen eine Synchronisationsvorrichtung in einer perspektivischen Ansicht sowie verschiedene Detaildarstellungen hierzu,
- Fig. 3a-3d: zeigen eine perspektivische Ansicht und eine Querschnittansicht eines Drehteiles mit einer integrierten Längenausgleichsvorrichtung in zwei verschiedenen Betriebsstellungen,
- Fig. 4a, 4b: zeigen eine perspektivische Ansicht und eine Querschnittansicht einer mit dem Drehteil gekoppelten Synchronisationsstange,
- Fig. 5a, 5b: zeigen eine perspektivische Ansicht und eine Querschnittansicht eines Ausführungsbeispiels einer Synchronisationsstange mit einer teilweise integrierten Längenausgleichsvorrichtung,
- Fig. 6a-6e: zeigen die Längenausgleichsvorrichtung gemäß den Fig. 5a-5b in verschiedenen Ansichten,
- Fig. 7a-7c: zeigen ein weiteres Ausführungsbeispiel einer Längenausgleichsvorrichtung,
- Fig. 8a-8c: zeigen ein weiteres Ausführungsbeispiel einer Längenausgleichsvorrichtung,
- Fig. 9a, 9b: zeigen eine Synchronisationsstange in einer perspektivischen Ansicht und eine Längenausgleichsvorrichtung in einer Explosionsdarstellung, und
- Fig. 10a-10c: zeigen die Längenausgleichsvorrichtung gemäß Fig. 9b in verschiedenen Ansichten,
- Fig. 11a, 11b: zeigen ein weiteres Ausführungsbeispiel einer Längenausgleichsvorrichtung in zwei verschiedenen Ansichten,
- Fig. 12a, 12b: zeigen das Ausführungsbeispiel der Längenausgleichsvorrichtung gemäß Fig. 11a, 11b in zwei verschiedenen Querschnittsansichten,
- Fig. 13: zeigt die Längenausgleichsvorrichtung gemäß Fig. 12a, 12b in einer Explosionsansicht.

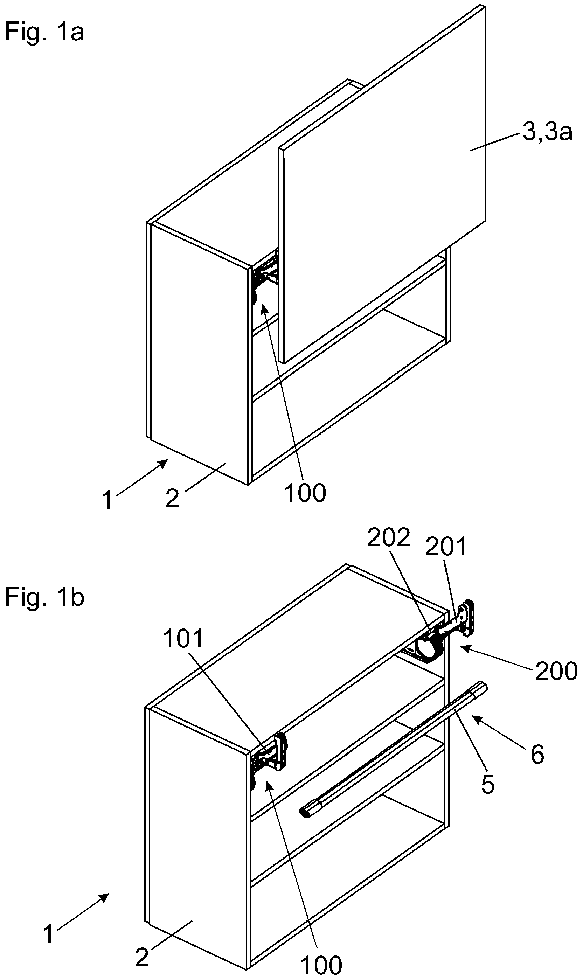

Fig. 1a zeigt ein Möbel 1 mit einem Möbelkorpus 2 und mit einem bewegbaren Möbelteil 3 in Form einer Klappe 3a, welche über zwei Antriebsvorrichtungen 100, 200 relativ zum Möbelkorpus 2 bewegbar gelagert ist.

In Fig. 1b ist das bewegbare Möbelteil 3 ausgeblendet, sodass die an gegenüberliegenden Seitenwänden montierten Antriebsvorrichtungen 100, 200 ersichtlich sind. Die beiden Antriebsvorrichtungen 100, 200 bilden zusammen mit einer Synchronisationsstange 5 eine Synchronisationsvorrichtung 6 zum Bewegen des bewegbaren Möbelteiles 3 aus.

Im gezeigten Ausführungsbeispiel weisen die beiden Antriebsvorrichtungen 100, 200 jeweils zumindest einen, vorzugsweise um eine horizontale Achse, schwenkbaren Stellarm 101, 201 auf, welcher mit dem bewegbaren Möbelteil 3 verbindbar ist.

Mit den Stellarmen 101, 201 ist jeweils ein Drehteil 102, 202 bewegungsgekoppelt verbunden, wobei das Drehteil 102 der linken Antriebsvorrichtung 100 aus der in Fig. 1b gezeigten Darstellung nicht hervorgeht. Die als Torsionswelle ausgebildete Synchronisationsstange 5 ist zur Synchronisation einer Bewegung der beiden Antriebsvorrichtungen 100, 200 vorgesehen, sodass eine gekoppelte, synchrone Drehbewegung der beiden Drehteile 102, 202 der beiden Antriebsvorrichtungen 100, 200 herbeigeführt wird. Selbstverständlich ist es auch möglich, dass das Drehteil 102, 202 von einem der Stellarme 101, 201 gebildet ist.

Vorzugsweise kann vorgesehen sein, dass die Synchronisationsstange 5 in einem montierten Zustand im Wesentlichen in einer horizontalen Richtung verläuft.

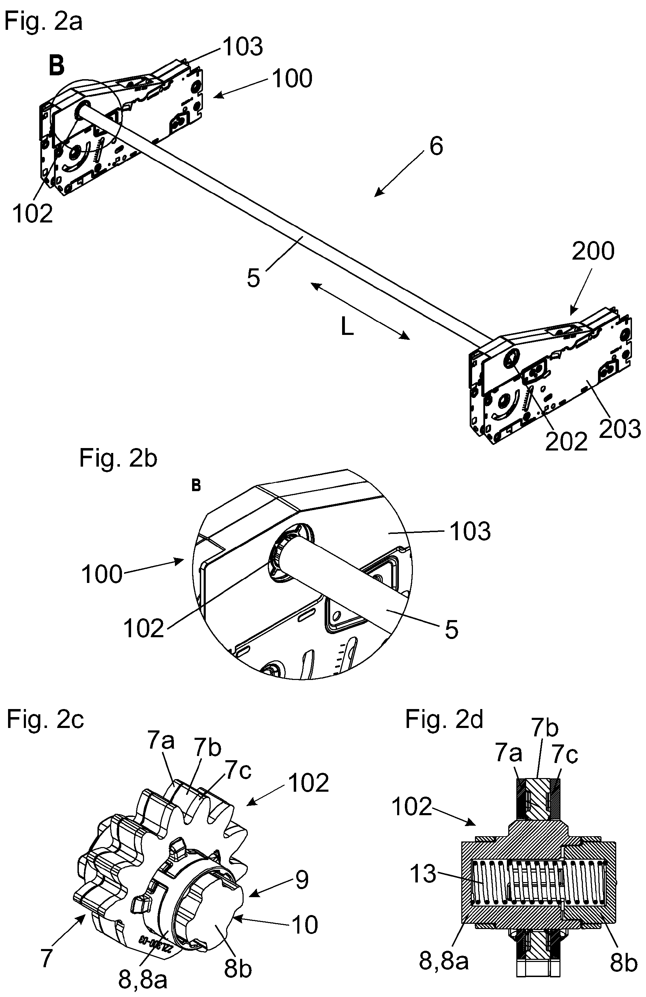

Fig. 2a zeigt ein Ausführungsbeispiel einer Synchronisationsvorrichtung 6 in einer perspektivischen Ansicht. Die Antriebsvorrichtungen 100, 200 weisen jeweils ein am Möbelkorpus 2 zu befestigendes Gehäuse 103, 203 und wenigstens ein Drehteil 102, 202 zum lösbaren Verbinden mit der Synchronisationsstange 5 auf. Das Gehäuse 103, 203 kann durch wenigstens zwei zumindest bereichsweise voneinander beabstandete Gehäusewände gebildet sein. Die eine Längsrichtung L aufweisende Synchronisationsstange 5 ist in einem verbundenen Zustand drehfest mit den Drehteilen 102, 202 der Antriebsvorrichtungen 100, 200 verbunden, sodass sich bei einer Bewegung eines Drehteiles 102, 202 auch die Synchronisationsstange 5 mitbewegt.

Gemäß einem Ausführungsbeispiel kann vorgesehen sein, dass zumindest eine der Antriebsvorrichtungen 100, 200 wenigstens einen um wenigstens eine erste Drehachse drehbaren Stellarm 101 (Fig. 1b) zum Bewegen des bewegbar gelagerten Möbelteiles 3 relativ zum Gehäuse 103, 203 aufweist, wobei das Drehteil 102, 202 der Antriebsvorrichtung 100, 200 seitlich versetzt zur ersten Drehachse des Stellarmes 101, 201 angeordnet ist.

Fig. 2b zeigt den in Fig. 2a eingekreisten Bereich "B" in einer vergrößerten Ansicht. Im gezeigten Ausführungsbeispiel ist das Drehteil 102, 202 jeweils in das Gehäuse 103, 203 integriert, wobei sich eine sehr kompakte Bauform der Antriebsvorrichtungen 100, 200 ergibt.

Fig. 2c zeigt ein Ausführungsbeispiel eines Drehteiles 102, welches zumindest bereichsweise, vorzugsweise im Wesentlichen vollständig, im Gehäuse 103 der Antriebsvorrichtung 100 integriert ist. Die Drehteile 102, 202 weisen jeweils eine Schnittstelle 10 zur lösbaren Befestigung der Synchronisationsstange 5 auf.

Gemäß möglichen Ausführungsbeispielen kann vorgesehen sein, dass zumindest eines der Drehteile 102, 202
- wenigstens eine Verzahnung 7 aufweist, vorzugsweise wobei die Verzahnung 7 wenigstens zwei Zahnsegmente 7a, 7b, 7c aufweist, die in Längsrichtung L der Synchronisationsstange 5 schichtweise aneinander anliegend angeordnet sind, und/oder
- an einer Welle 8 gelagert ist, wobei die Längenausgleichsvorrichtung 9 in die Welle 8 integriert ist, und/oder
- in das Gehäuse 103, 203 der Antriebsvorrichtung 100, 200 integriert ist, und/oder
- wenigstens zwei in Längsrichtung L der Synchronisationsstange 5 relativ zueinander bewegbare Bauteile 8a, 8b aufweist, vorzugsweise wobei die Bauteile 8a, 8b durch wenigstens einen Kraftspeicher 13 (Fig. 2d) relativ zueinander vorgespannt sind und/oder relativ zueinander teleskopierbar sind.

Gemäß möglichen Ausführungsbeispielen kann vorgesehen sein, dass eines der wenigstens zwei Zahnsegmente 7a, 7b, 7c aus einem ersten Material und das andere der Zahnsegmente 7a, 7b, 7c aus einem zweiten Material, welches eine geringere Härte als das erste Material aufweist, besteht, vorzugsweise wobei das erste Material Stahl und/oder das zweite Material Kunststoff ist.

Fig. 2d zeigt das Drehteil 102 gemäß Fig. 2c in einer Schnittdarstellung. Zu erkennen ist, dass das Drehteil 102 wenigstens zwei relativ zueinander verschiebbare Bauteile 8a, 8b aufweist, welche durch einen Kraftspeicher 13, vorzugsweise in Form einer Druckfeder, relativ zueinander vorgespannt sind.

Das Bauteil 8b ist derart ausgebildet, dass das Bauteil 8b mit der Synchronisationsstange 5 formschlüssig verbindbar ist, sodass eine Übertragung eines Drehmomentes zwischen dem Drehteil 102 und der Synchronisationsstange 5 herstellbar ist. Zu diesem Zweck können die Drehteile 102, 202 jeweils eine Schnittstelle 10 zur lösbaren Kopplung der Synchronisationsstange 5 aufweisen.

Gemäß einem weiteren Ausführungsbeispiel kann vorgesehen sein, dass wenigstens zwei Zahnsegmente 7a, 7b, 7c schichtweise in Richtung der Längsachse L der Synchronisationsstange 5 aneinander anliegend angeordnet sind, wobei ein Zahnsegment 7b der wenigstens zwei Zahnsegmente 7a, 7b, 7c in einer radialen Richtung über das andere der Zahnsegmente 7a, 7c vorsteht. Auf diese Weise kann das auftretende Spiel zwischen dem Drehteil 102, 202 und einem mit dem Drehteil 102, 202 kämmenden Übertragungselement (nicht gezeigt) reduziert werden.

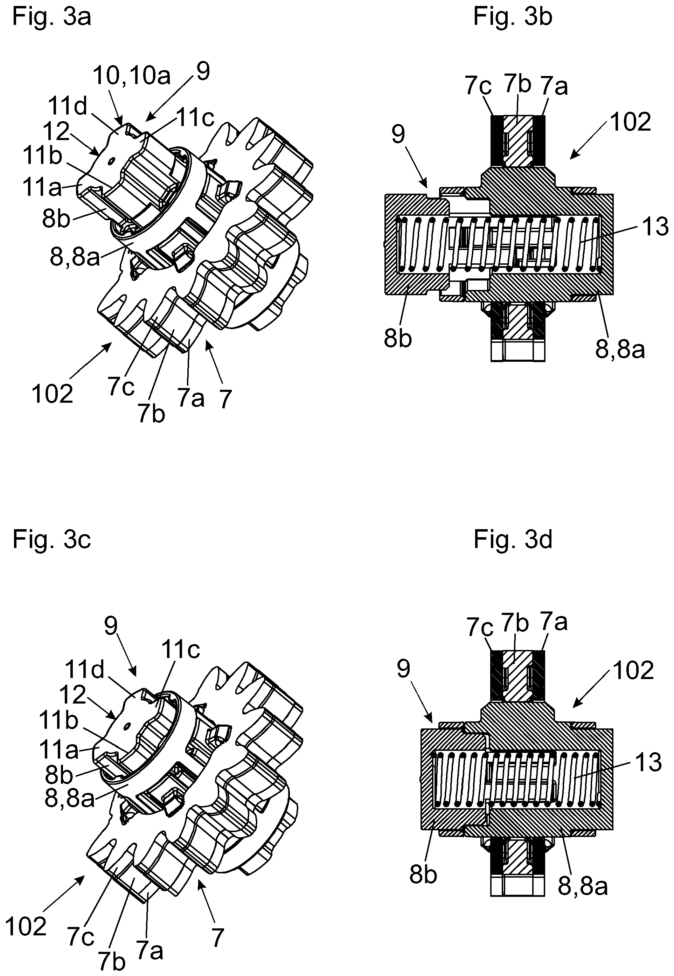

Fig. 3a zeigt eine perspektivische Ansicht eines Drehteiles 102 mit einer im Drehteil 102 integrierten Längenausgleichsvorrichtung 9. Zu erkennen ist die Verzahnung 7 mit den drei schichtweise aneinander anliegenden Zahnsegmenten 7a, 7b, 7c. Die beiden äußeren Zahnsegmente 7a, 7c können beispielsweise aus Metall und das mittlere Zahnsegment 7b aus Kunststoff gebildet sein, wobei das mittlere Zahnsegment 7b aus Kunststoff in einer radialen Richtung über die beiden äußeren Zahnsegmente 7a, 7c vorsteht.

Das Drehteil 102 weist eine Schnittstelle 10 zur lösbaren Verbindung mit der Synchronisationsstange 5 auf. Gemäß möglichen Ausführungsbeispielen kann vorgesehen sein, dass die Schnittstelle 10
- derart ausgebildet ist, dass die Synchronisationsstange 5 nur in einer einzigen Drehstellung innerhalb eines Drehwinkelbereichs von 360° mit dem Drehteil 102 verbindbar ist, und/oder
- ein Fügeteil 10a mit einer von einer Kreisform abweichenden Außenkontur zur formschlüssigen Aufnahme der Synchronisationsstange 5 aufweist, vorzugsweise wobei die Außenkontur abschnittsweise mehrere in Drehrichtung im Wesentlichen äquidistant angeordnete Vorsprünge 11a, 11b, 11c, 11d und wenigstens eine Abflachung 12 oder Vertiefung aufweist, welche anstelle eines Vorsprungs 11a, 11b, 11c, 11d angeordnet ist. Diese Konstruktion ermöglicht es, dass die Synchronisationsstange 5 nur in einer einzigen Drehstellung innerhalb eines Drehwinkelbereichs von 360° mit dem Drehteil 102 verbindbar ist.

Fig. 3b zeigt das Drehteil 102 gemäß Fig. 3a in einer Querschnittansicht. Zu erkennen ist, dass die Bauteile 8a, 8b durch einen Kraftspeicher 13 relativ zueinander vorgespannt sind, wobei sich das Bauteil 8b in einer ausgefahrenen Stellung relativ zum anderen Bauteil 8a befindet. In dieser Stellung ist also ein maximal auftretendes Spiel der Synchronisationsstange 5 relativ zum Drehteil 102 kompensierbar.

Fig. 3c zeigt das Drehteil 102 mit einem Bauteil 8b, welches sich in einer eingefahrenen Stellung relativ zum anderen Bauteil 8a befindet. In dieser Stellung ist also ein minimal auftretendes Spiel der Synchronisationsstange 5 relativ zum Drehteil 102 kompensierbar.

Fig. 3d zeigt das Drehteil 102 gemäß Fig. 3c in einer Querschnittansicht.

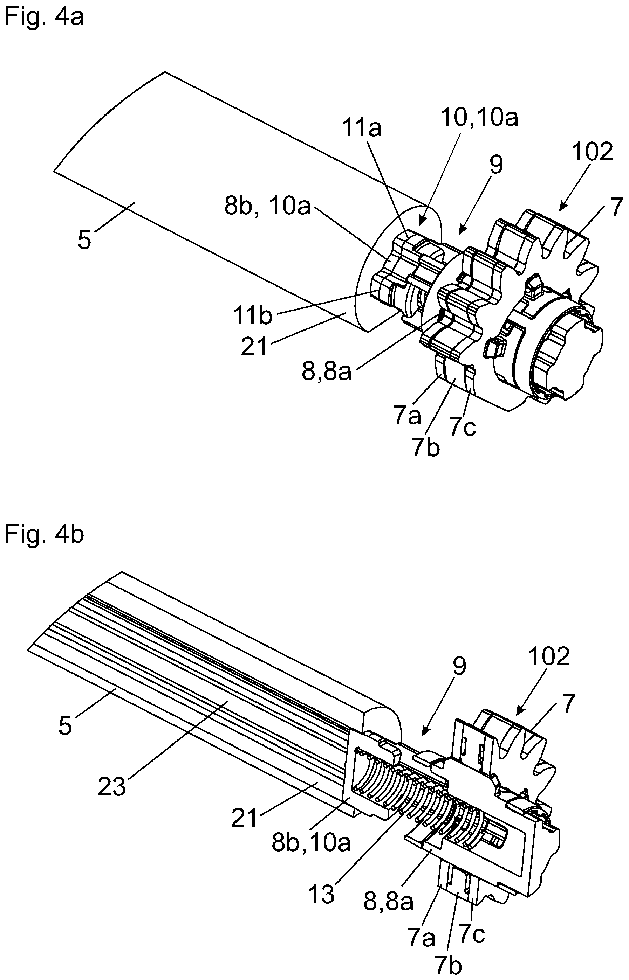

Fig. 4a zeigt eine perspektivische Ansicht einer mit dem Drehteil 102 gekoppelten Synchronisationsstange 5. Zu erkennen ist, dass die Vorsprünge 11a, 11b des als Fügeteil 10a ausgebildeten Bauteiles 8b formschlüssig in einen Endbereich der Synchronisationsstange 5 eingreifen.

Die Schnittstelle 10 kann eine von einer Kreisform abweichende Außenkontur und ein Aufnahmeteil 21 zur formschlüssigen Aufnahme des Fügeteiles 10a umfassen. Im gezeigten Ausführungsbeispiel wird das Aufnahmeteil 21 von der Synchronisationsstange 5 gebildet.

Fig. 4b zeigt eine Querschnittansicht der Synchronisationsstange 5 und des Drehteils 102 gemäß Fig. 4a. Die Synchronisationsstange 5 kann an zumindest einem der Endbereiche wenigstens einen Hohlraum 23 aufweisen, wobei die Längenausgleichsvorrichtung 9 zumindest abschnittsweise im Hohlraum 23 angeordnet ist.

Gemäß einem Ausführungsbeispiel kann vorgesehen sein, dass die Längenausgleichsvorrichtung 9 wenigstens einen ersten in Längsrichtung L der Synchronisationsstange 5 wirkenden Kraftspeicher 13 und der Kraftspeicher 13 zumindest abschnittsweise im Hohlraum 23 der Synchronisationsstange 5 angeordnet ist.

Die Synchronisationsstange 5 kann über eine gesamte Länge einen gleichen Querschnitt aufweisen und/oder kann über eine gesamte Länge als Hohlprofil mit gleichem Innendurchmesser ausgebildet sein.

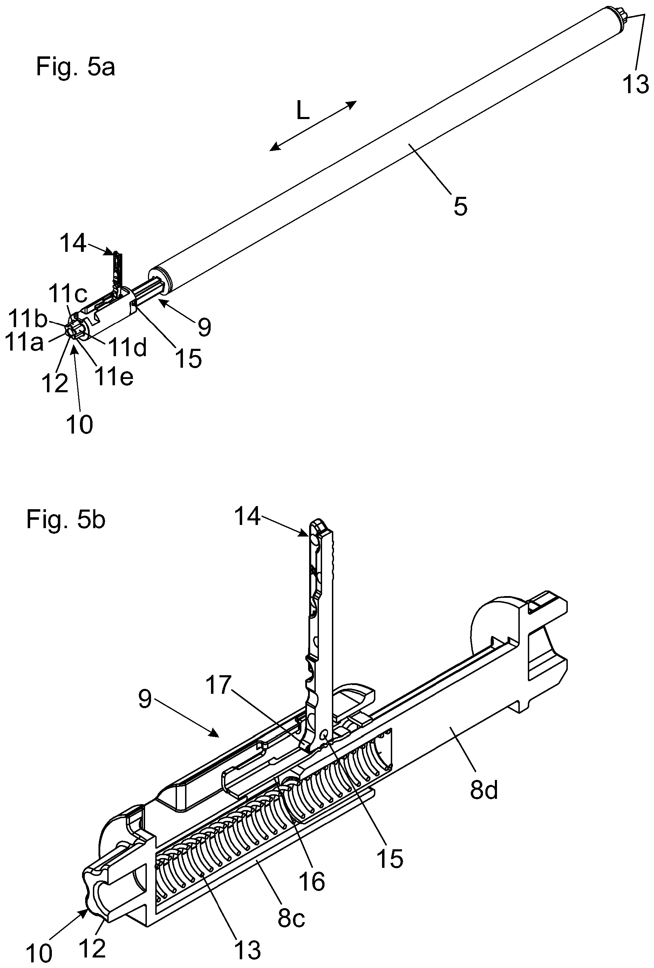

Fig. 5a zeigt eine perspektivische Ansicht eines Ausführungsbeispiels einer Synchronisationsstange 5 mit einer teilweise integrierten Längenausgleichsvorrichtung 9 zur Kompensation eines auftretenden Längsspiels in Längsrichtung L der Synchronisationsstange 5.

Gemäß einem Ausführungsbeispiel kann vorgesehen sein, dass die Längenausgleichsvorrichtung 9 an nur einem der Endbereiche an der Synchronisationsstange 5 angeordnet ist.

Die Synchronisationsstange 5 weist an einem ersten Endbereich eine feststehende Außenkontur 13 mit einem von einer Kreisform abweichenden Querschnitt auf. Die feststehende Außenkontur 13 ist mit einem der Drehteile 102, 202 der Antriebsvorrichtungen 100, 200 formschlüssig verbindbar.

Die Synchronisationsstange 5 weist an einem zweiten Endbereich eine Längenausgleichsvorrichtung 9 mit einer Schnittstelle 10 zum lösbaren Verbinden mit einem Drehteil 102, 202 einer Antriebsvorrichtung 100, 200 auf. Die Schnittstelle 10 umfasst mehrere in Drehrichtung im Wesentlichen äquidistant angeordnete Vorsprünge 11a, 11b, 11c, 11d und wenigstens eine Abflachung 12 oder Vertiefung, welche anstelle eines Vorsprungs 11a, 11b, 11c, 11d angeordnet ist.

Gemäß einem Ausführungsbeispiel kann vorgesehen sein, dass die Längenausgleichsvorrichtung 9 reibschlüssig mit der Synchronisationsstange 5 verbunden oder verbindbar ist.

Fig. 5b zeigt die Längenausgleichsvorrichtung 9 gemäß Fig. 5a in einer Querschnittansicht.

Die Längenausgleichsvorrichtung 9 weist wenigstens einen in Längsrichtung L der Synchronisationsstange 5 wirkenden Kraftspeicher 13 und/oder wenigstens ein quer zur Längsrichtung L der Synchronisationsstange 5 wirkendes Federelement 16 auf, wobei durch das Federelement 16 ein Spiel quer zur Längsrichtung L der Synchronisationsstange 5 ausgleichbar ist. Das Federelement 16 kann beispielsweise als Blattfeder ausgebildet sein.

Die Längenausgleichsvorrichtung 9 kann wenigstens zwei Verbindungsteile 8c, 8d aufweisen, welche relativ zueinander in Längsrichtung L der Synchronisationsstange 5, vorzugsweise begrenzt, verschiebbar gelagert sind. Die Verbindungsteile 8c, 8d sind durch einen Kraftspeicher 13, beispielsweise in Form einer Druckfeder, relativ zueinander vorgespannt.

Die Längenausgleichsvorrichtung 9 weist in diesem Ausführungsbeispiel wenigstens einen Schwenkhebel 14 auf, welcher um eine Schwenkachse 15 quer zur Längsrichtung L der Synchronisationsstange 5 zwischen einer Lösestellung und einer Arretierstellung schwenkbar gelagert ist.

Der Schwenkhebel 14 weist einen Vorsprung 17 auf, welcher durch eine Betätigung des Schwenkhebels 14 um die Schwenkachse 15 gegen das Federelement 16 und damit gegen das Bauteil 8c drückbar ist. Auf diese Weise ist die relative Lage der beiden zueinander verschiebbaren Verbindungssteile 8c, 8d der Längenausgleichsvorrichtung 9 arretierbar. Das Federelement 16 stützt sich zumindest in der Arretierstellung des Schwenkhebels 14 am Schwenkhebel 14 ab.

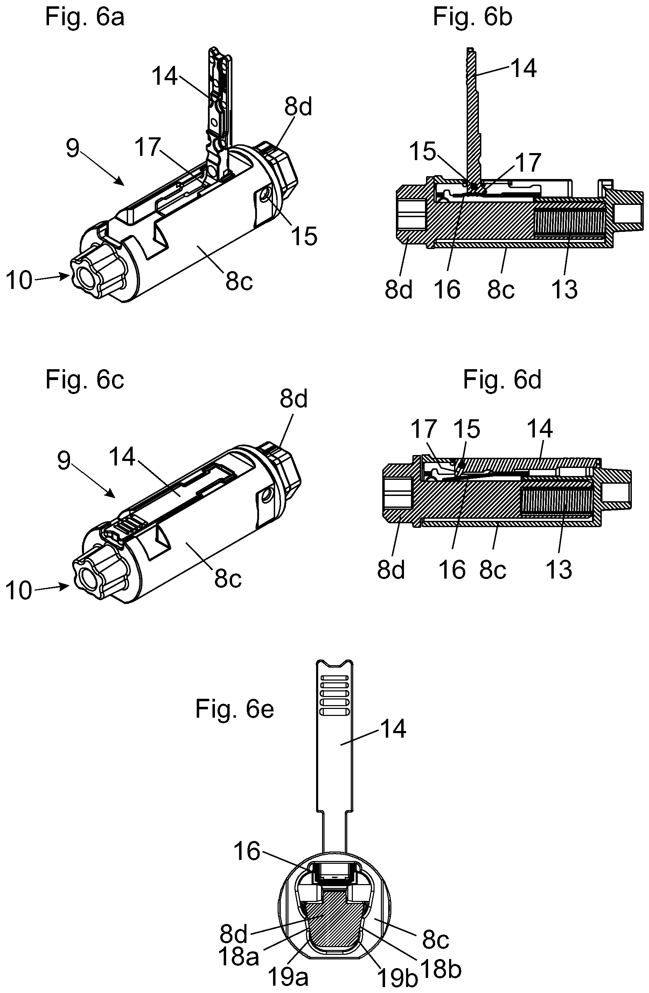

Fig. 6a-6e zeigen das Ausführungsbeispiel der Längenausgleichsvorrichtung 9 gemäß den Fig. 5a, 5b in verschiedenen Ansichten.

Fig. 6a zeigt die Längenausgleichsvorrichtung 9 mit dem Schwenkhebel 14 in einer Lösestellung. Die beiden Verbindungsteile 8c, 8d sind durch einen Kraftspeicher 13 relativ zueinander vorgespannt, wobei ein auftretendes Längsspiel der Synchronisationsstange 5 relativ zu den Drehteilen 102, 202 der beiden Antriebsvorrichtungen 100, 200 ausgleichbar ist. Darüber hinaus ist wenigstens ein zusätzliches Federelement 16 vorgesehen, durch welches ein quer zur Längsrichtung L auftretendes Spiel zwischen den beiden Verbindungsteilen 8c, 8d ausgleichbar ist.

Fig. 6b zeigt die Längenausgleichsvorrichtung 9 gemäß Fig. 6a in einer Querschnittansicht. Zu erkennen ist das Federelement 16 in Form einer Blattfeder, durch welches ein Spiel quer zur Längsrichtung L ausgleichbar ist. Der Schwenkhebel 14 ist um die Schwenkachse 15 bewegbar gelagert, wobei der Schwenkhebel 14 benachbart zur Schwenkachse 15 einen an das Federelement 16 anlegbaren Anschlag 17 aufweist.

Fig. 6c zeigt die Längenausgleichsvorrichtung 9 mit dem Schwenkhebel 14 in einer Arretierstellung, in welcher der Schwenkhebel 14 mit dem im Wesentlichen zylindrischen Verbindungssteil 8c bündig abschließt.

Fig. 6d zeigt die Längenausgleichsvorrichtung 9 gemäß Fig. 6c in einer Querschnittansicht. Durch eine Bewegung des Schwenkhebels 14 um die Schwenkachse 15 ist das Federelement 16 durch den Vorsprung 17 gegen das innere Verbindungsteil 8d drückbar, wobei die relative Lage zwischen den Verbindungsteilen 8c, 8d arretierbar ist.

Fig. 6e zeigt einen Querschnitt der Längenausgleichsvorrichtung 9 mit dem Schwenkhebel 14 in einer Lösestellung. Die Stellung des Schwenkhebels 14 entspricht also den Fig. 6a, 6b. Das Federelement 16 in Form einer Blattfeder kann einen U-förmigen Querschnitt aufweisen.

Gemäß möglichen Ausführungsbeispielen kann vorgesehen sein, dass
- eines der Verbindungsteile 8c, 8d eine Außenkontur mit einer Schrägfläche 18a, 18b, vorzugsweise zwei Schrägflächen 18a, 18b, und das andere der Verbindungsteile 8c, 8d eine Innenkontur mit einer korrespondierenden Gegenform 19a, 19b aufweist, und/oder
- eines der Verbindungsteile 8c, 8d eine Außenkontur in Form eines Sechskants aufweist, und/oder
- die Verbindungsteile 8c, 8d in eine Richtung quer zur Längsrichtung L der Synchronisationsstange 5, vorzugsweise begrenzt, verschiebbar gelagert, sind.

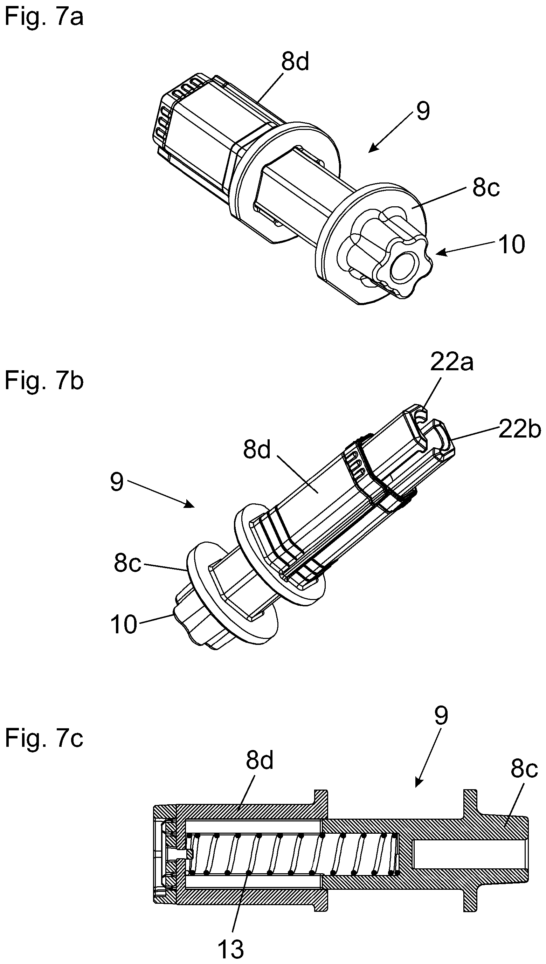

Fig. 7a-7c zeigen ein weiteres Ausführungsbeispiel einer Längenausgleichsvorrichtung 9 mit zwei relativ zueinander verschiebbaren Verbindungsteilen 8c, 8d, welche relativ zueinander durch einen Kraftspeicher 13 in einer Längsrichtung der Synchronisationsstange 5 vorgespannt sind.

Fig. 7a zeigt die Längenausgleichsvorrichtung 9 in einer perspektivischen Ansicht. Zumindest eines der Verbindungsteile 8c, 8d kann einen als Sechskant ausgebildeten Abschnitt aufweisen.

Fig. 7b zeigt die Längenausgleichsvorrichtung 9 in einer weiteren perspektivischen Ansicht. Das Verbindungsteil 8d weist zumindest ein Federstück 22a, 22b, vorzugsweise zwei Federstücke 22a, 22b, zur Befestigung der Längenausgleichsvorrichtung 9 an der Synchronisationsstange 5 auf. Das zumindest eine Federstück 22a, 22b ist in einen Hohlraum 23 (Fig. 4b) der Synchronisationsstange 5 einführbar, wobei die Längenausgleichsvorrichtung 9 durch radiales Aufweiten des Federstückes 22a, 22b innerhalb Hohlraumes 23 der Synchronisationsstange 5 klemmend zu befestigen ist.

Fig. 7c zeigt die Längenausgleichsvorrichtung 9 gemäß Fig. 7a, 7b in einer Querschnittansicht, wobei die Verbindungsstücke 8c, 8d durch den Kraftspeicher 13 in einer Längsrichtung L der Synchronisationsstange 5 auseinander gedrückt werden.

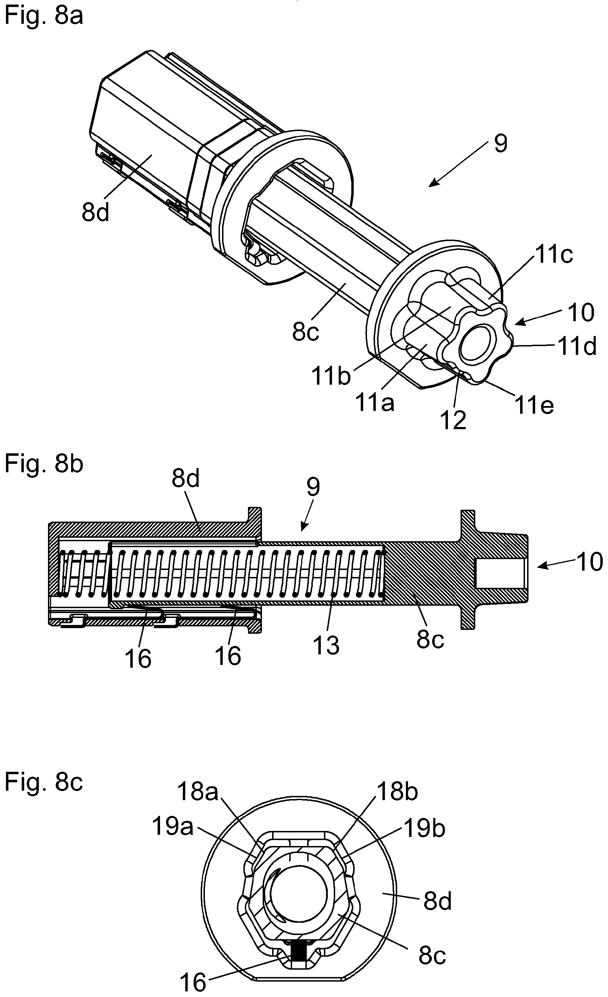

Fig. 8a-8c zeigen ein weiteres Ausführungsbeispiel einer Längenausgleichsvorrichtung 9 mit zwei relativ zueinander verschiebbaren Verbindungsteilen 8c, 8d, welche relativ zueinander durch einen Kraftspeicher 13 in einer Längsrichtung der Synchronisationsstange 5 vorgespannt sind.

Fig. 8a zeigt eine perspektivische Ansicht der Längenausgleichsvorrichtung 9. Die Schnittstelle 10 zur lösbaren Befestigung der Synchronisationsstange 5 kann eine Abflachung 12 oder eine Vertiefung aufweisen, welche anstelle eines Vorsprungs 11a, 11b, 11c, 11d, 11e angeordnet ist.

Fig. 8b zeigt die Längenausgleichsvorrichtung 9 gemäß Fig. 8a in einer Querschnittansicht. Zu erkennen ist, dass zumindest zwei in Längsrichtung L der Synchronisationsstange 5 voneinander beabstandete Federelemente 16 vorgesehen sind, durch welche jeweils ein quer zur Längsrichtung L auftretendes Spiel der Synchronisationsstange 5 ausgleichbar ist.

Fig. 8c zeigt einen Überlappungsbereich der beiden Verbindungsteile 8c, 8d in einem Querschnitt. Eines der Verbindungsteile 8c, 8d weist eine Außenkontur mit einer Schrägfläche 18a, 18b, vorzugsweise zwei Schrägflächen 18a, 18b, auf. Das andere der Verbindungsteile 8c, 8d weist eine Innenkontur mit einer korrespondierenden Gegenform 19a, 19b auf. Durch die Kraft der Federelemente 16 wird das eine Verbindungsteil 8c über die Schrägflächen 18a, 18b und die korrespondierende Gegenform 19a, 19b in das andere Verbindungsteil 8d eingepresst.

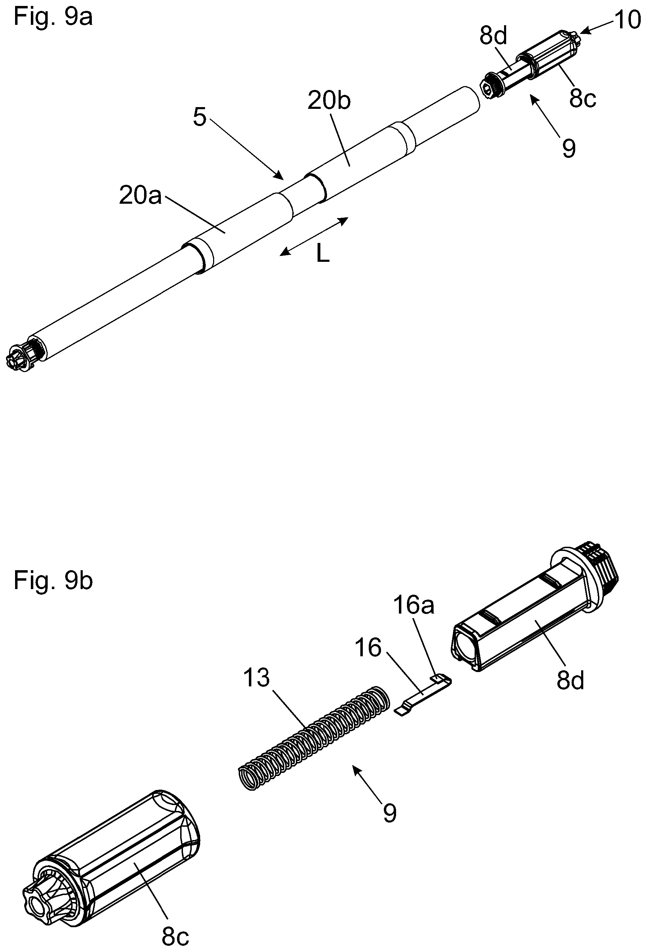

Fig. 9a zeigt eine Synchronisationsstange 5 in einer perspektivischen Ansicht. Es kann wenigstens ein Abdeckelement 20a, 20b vorgesehen sein, welches in Längsrichtung L der Synchronisationsstange 5 relativ zur Synchronisationsstange 5 verschiebbar angeordnet ist und welches dazu ausgebildet ist, einen der Endbereiche der Synchronisationsstange 5 abzudecken. Im gezeigten Ausführungsbeispiel ist das zumindest eine Abdeckelement 20a, 20b als eine im Wesentlichen zylindrische Hülse ausgebildet, welche entlang der Synchronisationsstange 5 verschiebbar gelagert ist.

Fig. 9b zeigt die in Fig. 9a dargestellte Längenausgleichsvorrichtung 9 in einer Explosionsansicht. Die beiden zueinander verschiebbaren Verbindungsteile 8c, 8d sind durch einen Kraftspeicher 13 in einer Längsrichtung L der Synchronisationsstange 5 vorgespannt. Zusätzlich dazu ist wenigstens ein Federelement 16 vorgesehen, durch welches ein quer zur Längsrichtung L auftretendes Spiel kompensierbar ist. Das Federelement 16 weist ein abgebogenes Ende 16a zur Anlage an einem der Verbindungsteile 8c, 8d auf.

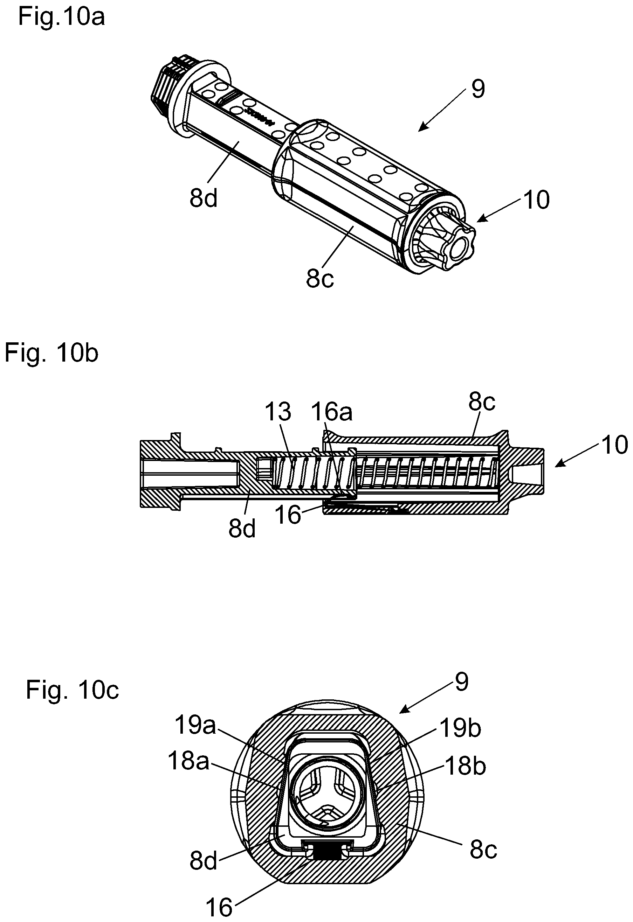

Fig. 10a-10c zeigen die zeigen die Längenausgleichsvorrichtung 9 gemäß Fig. 9b in verschiedenen Ansichten.

Fig. 10a zeigt die Längenausgleichsvorrichtung 9 in einer perspektivischen Ansicht. Die Längenausgleichsvorrichtung 9 umfasst wenigstens zwei relativ zueinander teleskopierbare Verbindungsteile 8c, 8d, welche relativ zueinander durch wenigstens einen Kraftspeicher 13 in einer Längsrichtung L der Synchronisationsstange 5 vorgespannt sind.

Fig. 10b zeigt die Längenausgleichsvorrichtung 9 gemäß Fig. 10a in einer Querschnittansicht. Durch ein zusätzliches Federelement 16 ist ein quer zur Längsrichtung L der Synchronisationsstange 5 auftretendes Spiel ausgleichbar. Das abgebogene Ende 16a des Federelementes 16 stützt sich an einer Umfangsfläche des Verbindungsteiles 8d ab, wobei neben dem Spielausgleich quer zur Längsrichtung auch eine Ausfahrbewegung der beiden Verbindungsteile 8c, 8d zueinander begrenzbar ist.

Fig. 10c zeigt die Längenausgleichsvorrichtung 9 gemäß Fig. 10a, 10b in einem Querschnitt. Das innere Verbindungsteil 8d weist Schrägflächen 18a, 18b auf, welche durch eine Kraft des Federelementes 16 an die korrespondierende Gegenform 19a, 19b des anderen Verbindungsteiles 8c gedrückt werden.

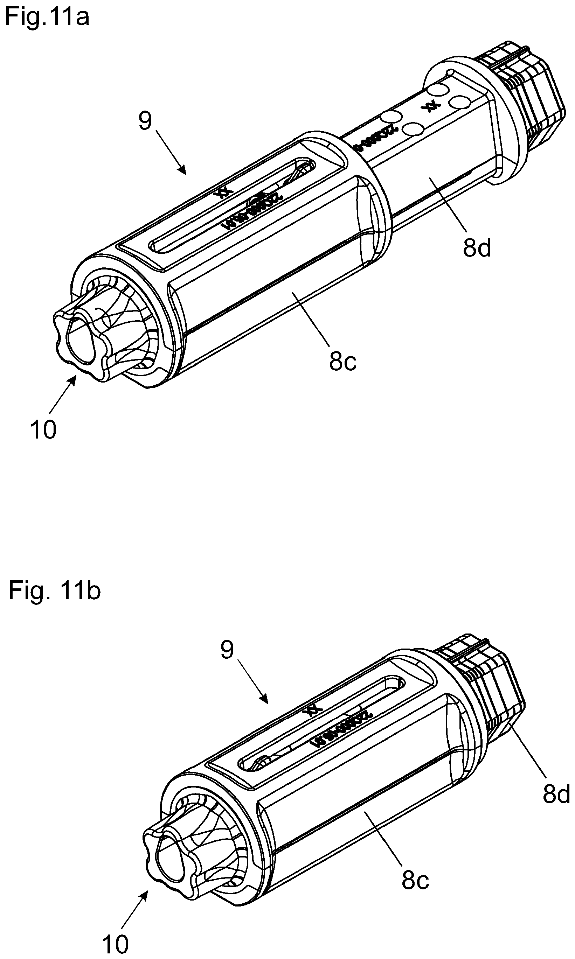

Fig. 11a und Fig. 11b zeigen ein weiteres Ausführungsbeispiel einer Längenausgleichsvorrichtung 9.

Fig. 11a zeigt die Längenausgleichsvorrichtung 9 mit den beiden Verbindungsteilen 8c, 8d in einem ausgefahrenen Zustand.

Fig. 11b zeigt die Längenausgleichsvorrichtung 9 mit den beiden Verbindungsteilen 8c, 8d in einem komprimierten Zustand, in welchem die Synchronisationsstange 5 über die Schnittstelle 10 mit einem Drehteil 102, 202 einer Antriebsvorrichtung 100, 200 lösbar verbindbar ist.

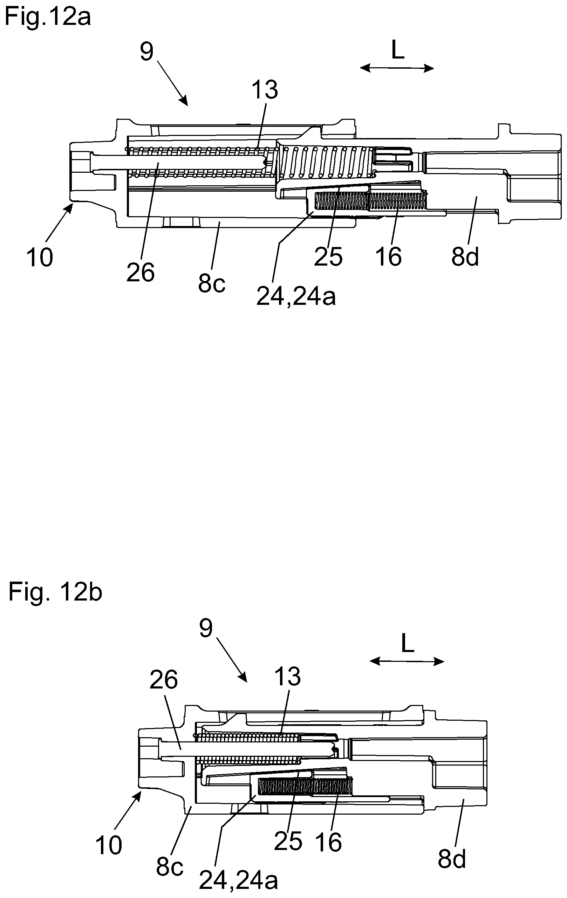

Fig. 12a und Fig. 12b zeigen die Längenausgleichsvorrichtung 9 gemäß den vorhergehenden Figuren 11a, 11b.

Fig. 12a zeigt die Längenausgleichsvorrichtung 9 mit den beiden Verbindungsteilen 8c, 8d in einem ausgefahrenen Zustand.

Die Längenausgleichsvorrichtung 9 umfasst wenigstens einen in Längsrichtung L der Synchronisationsstange 5 wirkenden Kraftspeicher 13, durch welchen die beiden Verbindungsteile 8c, 8d in der Längsrichtung L vorgespannt sind.

Zusätzlich zum Kraftspeicher 13 umfasst die Längenausgleichsvorrichtung 9 wenigstens ein quer zur Längsrichtung L der Synchronisationsstange 5 wirkendes Spielausgleichselement 24, durch welches ein auftretendes Spiel quer zur Längsrichtung L der Synchronisationsstange 5 ausgleichbar ist.

Gemäß möglichen Ausführungsbeispielen kann vorgesehen sein, dass das wenigstens eine Spielausgleichselement 24
- als Federelement 16 ausgebildet ist, vorzugsweise wobei das Federelement 16 als Blattfeder oder als Schraubenfeder ausgebildet ist, und/oder Erfindungsgemäss weist das Spielausgleichselement
- wenigstens ein Keilelement 24a mit einer schräg zur Längsrichtung L der Synchronisationsstange 5 verlaufenden Keilfläche 25 auf, vorzugsweise wobei das wenigstens eine Keilelement 24a durch ein Federelement 16 in eine Richtung parallel zur Längsrichtung L der Synchronisationsstange 5 vorgespannt ist, und/oder in Längsrichtung L der Synchronisationsstange 5 verschiebbar gelagert ist.

Gemäß einem möglichen Ausführungsbeispiel kann vorgesehen sein, dass der Kraftspeicher 13 und das Federelement 16 jeweils als Schraubenfedern ausgebildet sind, wobei die Längsrichtungen der beiden Schraubenfedern im Wesentlichen parallel zueinander verlaufen. Auf diese Weise ist eine besonders kompakte Anordnung möglich.

Das zusätzliche Spielausgleichselement 24 dient also dazu, ein quer zur Längsrichtung L auftretendes Spiel zu kompensieren, wobei jedoch eine Relativbewegung der beiden Verbindungsteile 8c, 8d zueinander in der Längsrichtung L durch das Spielausgleichselement 24 nicht behindert wird.

Darüber hinaus ist das Spielausgleichselement 24 selbstnachsetzend ausgebildet, sodass ein quer zur Längsrichtung L auftretendes Spiel durch das Spielausgleichselement 24 selbsttätig kompensierbar ist.

Fig. 12b zeigt die Längenausgleichsvorrichtung 9 gemäß Fig. 12a in einem komprimierten Zustand.

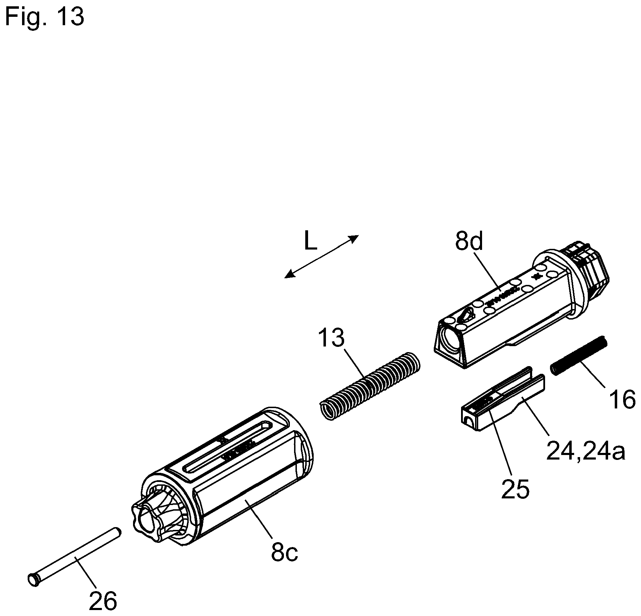

Fig. 13 zeigt die Längenausgleichsvorrichtung 9 gemäß Fig. 12a, 12b in einer Explosionsansicht.

Durch wenigstens ein Stabilisierungselement 26 ist ein Ausknicken des Kraftspeichers 13 in eine quer zur Längsrichtung L verlaufende Richtung begrenzbar.

Durch das wenigstens eine Spielausgleichselement 24 mit dem Keilelement 24 und dem Federelement 16 ist ein quer zur Längsrichtung L auftretendes Spiel zwischen den beiden Verbindungsteilen 8c, 8d kompensierbar.

## Patentansprüche

1. Synchronisationsvorrichtung (6) mit zumindest zwei Antriebsvorrichtungen (100, 200) zum Bewegen eines bewegbaren Möbelteiles (3) und mit wenigstens einer Synchronisationsstange (5) zur Synchronisation der Bewegung der zumindest zwei Antriebsvorrichtungen (100, 200), wobei ein erster Endbereich der Synchronisationsstange (5) mit einem ersten Drehteil (102) der ersten Antriebsvorrichtung (100) und ein zweiter Endbereich der Synchronisationsstange (5) mit einem zweiten Drehteil (202) der zweiten Antriebsvorrichtung (200) verbindbar ist, wobei wenigstens eine Längenausgleichsvorrichtung (9) vorgesehen ist, mit welcher in einem montierten Zustand der Synchronisationsstange (5) ein Spiel in einer Längsrichtung (L) der Synchronisationsstange (5) zwischen den Antriebsvorrichtungen (100, 200) und der Synchronisationsstange (5) zumindest teilweise ausgleichbar ist, wobei zumindest eine der Antriebsvorrichtungen (100, 200) ein Gehäuse (103, 203) aufweist und die Längenausgleichsvorrichtung (9) zumindest bereichsweise in das Gehäuse (103, 203) integriert ist und/oder dass die Längenausgleichsvorrichtung (9) zumindest bereichsweise in die Synchronisationsstange (5) integriert ist, **dadurch gekennzeichnet, dass** die Längenausgleichsvorrichtung (9) wenigstens ein quer zur Längsrichtung (L) der Synchronisationsstange (5) wirkendes Spielausgleichselement (24) aufweist, durch welches ein Spiel quer zur Längsrichtung (L) der Synchronisationsstange (5) ausgleichbar ist, wobei das wenigstens eine Spielausgleichselement (24) wenigstens ein Keilelement (24a) mit einer schräg zur Längsrichtung (L) der Synchronisationsstange (5) verlaufenden Keilfläche (25) aufweist.

2. Synchronisationsvorrichtung (6) nach Anspruch 1, **dadurch gekennzeichnet, dass** zumindest eines der Drehteile (102, 202)
- wenigstens eine Verzahnung (7) aufweist, vorzugsweise wobei die Verzahnung (7) wenigstens zwei Zahnsegmente (7a, 7b, 7c) aufweist, die in Längsrichtung (L) der Synchronisationsstange (5) schichtweise aneinander anliegend angeordnet sind, und/oder
- an einer Welle (8) gelagert ist, wobei die Längenausgleichsvorrichtung (9) in die Welle (8) integriert ist, und/oder
- in das Gehäuse (103, 203) der Antriebsvorrichtung (100, 200) integriert ist, und/oder
- wenigstens zwei in Längsrichtung (L) der Synchronisationsstange (5) relativ zueinander bewegbare Bauteile (8a, 8b) aufweist, vorzugsweise wobei die Bauteile (8a, 8b) durch wenigstens einen Kraftspeicher (13) relativ zueinander vorgespannt sind und/oder zueinander teleskopierbar sind.

3. Synchronisationsvorrichtung (6) nach Anspruch 1 oder 2, **dadurch gekennzeichnet, dass** die Drehteile (102, 202) jeweils eine Schnittstelle (10) zur lösbaren Befestigung der Synchronisationsstange (5) aufweisen.

4. Synchronisationsvorrichtung (6) nach Anspruch 3, wobei die Schnittstelle (10)
- derart ausgebildet ist, dass die Synchronisationsstange (5) nur in einer einzigen Drehstellung innerhalb eines Drehwinkelbereichs von 360° mit dem Drehteil (102, 202) verbindbar ist, und/oder
- ein Fügeteil (10a) mit einer von einer Kreisform abweichenden Außenkontur und ein Aufnahmeteil (21) zur formschlüssigen Aufnahme des Fügeteiles (10a) aufweist, vorzugsweise wobei die Außenkontur abschnittsweise mehrere in Drehrichtung im Wesentlichen äquidistant angeordnete Vorsprünge (11a, 11b, 11c, 11d) und wenigstens eine Abflachung (12) oder Vertiefung aufweist, welche anstelle eines Vorsprungs (11a, 11b, 11c, 11d) angeordnet ist.

5. Synchronisationsvorrichtung (6) nach einem der Ansprüche 1 bis 4, **dadurch gekennzeichnet, dass** die Längenausgleichsvorrichtung (9) wenigstens einen in Längsrichtung (L) der Synchronisationsstange (5) wirkenden Kraftspeicher (13) aufweist.

6. Synchronisationsvorrichtung (6) nach einem der Ansprüche 1 bis 5, wobei
- das wenigstens eine Spielausgleichselement (24) als Federelement (16) ausgebildet ist, vorzugsweise wobei das Federelement (16) als Blattfeder oder als Schraubenfeder ausgebildet ist, und/oder
- das wenigstens eine Keilelement (24a) durch ein Federelement (16) in eine Richtung parallel zur Längsrichtung (L) der Synchronisationsstange (5) vorgespannt ist, und/oder in Längsrichtung (L) der Synchronisationsstange (5) verschiebbar gelagert ist.

7. Synchronisationsvorrichtung (6) nach einem der Ansprüche 1 bis 6, **dadurch gekennzeichnet, dass** die Längenausgleichsvorrichtung (9) wenigstens einen Schwenkhebel (14) aufweist, welcher um eine Schwenkachse (15) quer zur Längsrichtung (L) der Synchronisationsstange (5) zwischen einer Lösestellung und einer Arretierstellung schwenkbar ist.

8. Synchronisationsvorrichtung (6) nach Anspruch 6 und 7, **dadurch gekennzeichnet**, sich das Federelement (16) zumindest in der Arretierstellung des Schwenkhebels (14) am Schwenkhebel (14) abstützt.

9. Synchronisationsvorrichtung (6) nach einem der Ansprüche 1 bis 8, **dadurch gekennzeichnet, dass** die Längenausgleichsvorrichtung (9) wenigstens zwei Verbindungsteile (8c, 8d) aufweist, welche relativ zueinander in Längsrichtung (L) der Synchronisationsstange (5), vorzugsweise begrenzt, verschiebbar gelagert sind.

10. Synchronisationsvorrichtung (6) nach Anspruch 9, **dadurch gekennzeichnet, dass**
- eines der Verbindungsteile (8c, 8d) eine Außenkontur mit einer Schrägfläche (18a, 18b), vorzugsweise zwei Schrägflächen (18a, 18b), und das andere der Verbindungsteile (8c, 8d) eine Innenkontur mit einer korrespondierenden Gegenform (19a, 19b) aufweist, und/oder
- eines der Verbindungsteile (8c, 8d) eine Außenkontur in Form eines Sechskants aufweist, und/oder
- die Verbindungsteile (8c, 8d) in eine Richtung quer zur Längsrichtung (L) der Synchronisationsstange (5), vorzugsweise begrenzt, verschiebbar gelagert, sind.

11. Synchronisationsvorrichtung (6) nach einem der Ansprüche 1 bis 10, **dadurch gekennzeichnet, dass** die Synchronisationsstange (5) an zumindest einem der Endbereiche wenigstens einen Hohlraum (23) aufweist und die Längenausgleichsvorrichtung (9) zumindest abschnittsweise im Hohlraum (23) angeordnet ist, vorzugsweise wobei die Längenausgleichsvorrichtung (9) wenigstens einen ersten in Längsrichtung (L) der Synchronisationsstange (5) wirkenden Kraftspeicher (13) und der Kraftspeicher (13) zumindest abschnittsweise im Hohlraum (23) der Synchronisationsstange (5) angeordnet ist.

12. Synchronisationsvorrichtung (6) nach einem der Ansprüche 1 bis 11, **dadurch gekennzeichnet, dass** wenigstens ein Abdeckelement (20a, 20b) vorgesehen ist, welches in Längsrichtung (L) der Synchronisationsstange (5) relativ zur Synchronisationsstange (5) verschiebbar angeordnet ist und welches dazu ausgebildet ist, einen der Endbereiche der Synchronisationsstange (5) abzudecken.

13. Synchronisationsvorrichtung (6) nach einem der Ansprüche 1 bis 12, **dadurch gekennzeichnet, dass** die Längenausgleichsvorrichtung (9) an nur einem der Endbereiche an der Synchronisationsstange (5) angeordnet ist.

14. Synchronisationsvorrichtung (6) nach einem der Ansprüche 1 bis 13, **dadurch gekennzeichnet, dass** die Längenausgleichsvorrichtung (9) reibschlüssig mit der Synchronisationsstange (5) verbunden oder verbindbar ist.

15. Synchronisationsvorrichtung (6) nach einem der Ansprüche 1 bis 14, **dadurch gekennzeichnet, dass** zumindest eine der Antriebsvorrichtungen (100, 200) wenigstens einen um wenigstens eine erste Drehachse drehbaren Stellarm (101) zum Bewegen des bewegbar gelagerten Möbelteiles (3) relativ zum Gehäuse (103, 203) aufweist, wobei das Drehteil (102, 202) der Antriebsvorrichtung (100, 200) seitlich versetzt zur ersten Drehachse des Stellarmes (101, 201) angeordnet ist.

16. Synchronisationsvorrichtung (6) nach einem der Ansprüche 1 bis 15, **dadurch gekennzeichnet, dass** die Synchronisationsstange (5)
- auch dann mit den Drehteilen (102, 202) der Antriebsvorrichtungen (100, 200) lösbar verbindbar ist, wenn die Antriebsvorrichtungen (100, 200), vorzugsweise an einem Möbelkorpus (2), bereits vormontiert sind, und/oder
- in einem verbundenen Zustand mit den Drehteilen (102, 202) der Antriebsvorrichtungen (100, 200) drehfest verbunden ist, und/oder
- durch die Längenausgleichsvorrichtung (9) zwischen den beiden gegenüberliegenden Drehteilen (102, 202) der beiden Antriebsvorrichtungen (100, 200) mit einer vorgegebenen Haltekraft in Längsrichtung (L) der Synchronisationsstange (5) relativ zu den beiden Drehteilen (102, 202) der Antriebsvorrichtungen (100, 200) vorgespannt und zwischen den beiden Drehteilen (102, 202) in Längsrichtung (L) der Synchronisationsstange (5) spielfrei gehalten ist, und/oder
- längenunveränderlich ausgebildet ist, und/oder
- über eine gesamte Länge einen gleichen Querschnitt aufweist, und/oder
- über eine gesamte Länge als Hohlprofil mit gleichem Innendurchmesser ausgebildet ist.

## Claims

1. A synchronization device (6) comprising at least two drive devices (100, 200) for moving a movable furniture part (3) and at least one synchronization rod (5) for synchronizing a movement of the at least two drive devices (100, 200), a first end region of the synchronization rod (5) being configured to be connected to a first pivoting member (102) of the first drive device (100) and a second end region of the synchronization rod (5) being configured to be connected to a second pivoting member (202) of the second drive device (200, wherein at least one length compensating device (9) is provided configured to at least partially compensate for a play between the drive devices (100, 200) and the synchronization rod (5) in a direction extending in a longitudinal direction (L) of the synchronization rod (5) in a mounted condition of the synchronization rod (5), wherein at least one of the drive devices (100, 200) includes a housing (103, 203), and the length compensating device (9) is at least partially integrated into the housing (103, 203) and/or the length compensating device (9) is at least partially integrated into the synchronization rod (5), **characterized in that** the length compensating device (9) includes at least one play compensating element (24) operating in a direction extending transversely to the longitudinal direction (L) of the synchronization rod (5), wherein a play occurring in a direction extending transversely to the longitudinal direction (L) of the synchronization rod (5) can be compensated for by the at least one play compensating element (24), wherein the at least one play compensating element (24) includes at least one wedge element (24a) having a wedge surface (25) extending inclinedly to the longitudinal direction (L) of the synchronization rod (5).

2. The synchronization device (6) according to claim 1, **characterized in that** at least one of the pivoting members (102, 202)
- includes at least one tooth arrangement (7), preferably wherein the tooth arrangement (7) includes at least two tooth segments (7a, 7b, 7c) bearing in layers against each other in a longitudinal direction (L) of the synchronization rod (5), and/or
- is supported on a shaft (8), and the length compensating device (9) is integrated into the shaft (8), and/or
- is integrated into the housing (103, 203) of the drive device (100, 200), and/or
- includes at least two components (8a, 8b) configured to be moved relative to each other in the longitudinal direction (L) of the synchronization rod (5), preferably wherein the components (8a, 8b) are pre-stressed relative to each other by at least one force storage member (13) and/or are telescopically movable relative to each other.

3. The synchronization device (6) according to claim 1 or 2, **characterized in that** each of the pivoting members (102, 202) includes an interface (10) for releasably fixing the synchronization rod (5).

4. The synchronization device (6) according to claim 3, wherein the interface (10)
- is configured such that the synchronization rod (5) is connectable to the pivoting member (102, 202) only in one single pivoting position within a pivoting angle range of 360°, and/or
- includes an assembling portion (10a) having an outer contour deviating from a circular form, and a receiving portion (21) for receiving the assembling portion (10a) in a form-locking manner, preferably wherein the outer contour includes, over a region, a plurality of protrusions (11a, 11b, 11c, 11d) arranged substantially equidistantly in the pivoting direction, and further includes a flattening (12) or a recess which is arranged instead of a protrusion (11a, 11b, 11c, 11d).

5. The synchronization device (6) according to one of the claims 1 to 4, **characterized in that** the length compensating device (9) includes at least one force storage member (13) operating in the longitudinal direction (L) of the synchronization rod (5).

6. The synchronization device (6) according to one of the claims 1 to 5, **characterized in that**
- the at least one play compensating element (24) is configured as a spring element (16), preferably wherein the spring element (16) is a leaf spring or a helical spring, and/or
- the at least one wedge element (24a) is pre-stressed by a spring element (16) in a direction extending parallel to the longitudinal direction (L) of the synchronization rod (5), and/or is displaceably supported in the longitudinal direction (L) of the synchronization rod (5).

7. The synchronization device (6) according to one of the claims 1 to 6, **characterized in that** the length compensating device (9) includes at least one pivoting lever (14) pivotable about a pivoting axis (15) between a release position and an arresting position, the pivoting axis (15) extending transversely to the longitudinal direction (L) of the synchronization rod (5).

8. The synchronization device (6) according to claim 6 and 7, **characterized in that** the spring element (16) is supported on the pivoting lever (16) at least in the arresting position of the pivoting lever (14).

9. The synchronization device (6) according to one of the claims 1 to 8, **characterized in that** the length compensating device (9) includes at least two connecting members (8c, 8d) displaceably supported relative to each other, preferably in a limited manner, in the longitudinal direction (L) of the synchronization rod (5).

10. The synchronization device (6) according to claim 9, **characterized in that**
- one of the connecting members (8c, 8d) includes an outer contour with an inclined surface (18a, 18b), preferably two inclined surfaces (18a, 18b), and the other of the connecting members (8c, 8d) includes an inner contour with a corresponding counterform (19a, 19b), and/or
- one of the connecting members (8c, 8d) includes an outer contour in the form of a hexagon, and/or
- the connecting members (8c, 8d) are displaceably supported, preferably in a limited manner, in a direction extending transversely to the longitudinal direction (L) of the synchronization rod (5).

11. The synchronization device (6) according to one of the claims 1 to 10, **characterized in that** the synchronization rod (5), on at least one of the end regions, includes at least one cavity (23) and the length compensating device (9) is at least partially arranged within the cavity (23), preferably wherein the length compensating device (9) includes at least one first force storage member (13) operating in the longitudinal direction (L) of the synchronization rod (5), and the force storage member (13) is at least partially arranged within the cavity (23) of the synchronization rod (5).

12. The synchronization device (6) according to one of the claims 1 to 11, **characterized in that** at least one cover element (20a, 20b) is provided, the at least one cover element (20a, 20b) being displaceably arranged relative to the synchronization rod (5) in the longitudinal direction (L) of the synchronization rod (5) and being configured to cover an end region of the synchronization rod (5).

13. The synchronization device (6) according to one of the claims 1 to 12, **characterized in that** the length compensating device (9) is arranged on the synchronization rod (5) on one end region only.

14. The synchronization device (6) according to one of the claims 1 to 13, **characterized in that** the length compensating device (9) is connected or is configured to be connected to the synchronization rod (5) in a friction-locked manner.

15. The synchronization device (6) according to one of the claims 1 to 14, **characterized in that** at least one of the drive devices (100, 200) includes at least one actuating arm (101) pivotable about a first pivoting axis for moving the movablysupported furniture part (3) relative to the housing (103, 203), wherein the pivoting member (102, 202) of the drive device (100, 200) is arranged laterally offset with respect to the first pivoting axis of the actuating arm (101, 201).

16. The synchronization device (6) according to one of the claims 1 to 15, **characterized in that** the synchronization rod (5)
- is configured to be releasably connected to the pivoting members (102, 202) of the drive devices (100, 200), also when the drive devices (100, 200) have already been pre mounted, in particular to a furniture carcass (2), and/or
- is connected to the pivoting members (102, 202) of the drive devices (100, 200) in a torque-proof manner in a mounted condition, and/or
- is pre-stressed relative to the two pivoting members (102, 202) of the drive devices (100, 200) with a predetermined holding force by the length compensating device (9) between the two opposing pivoting members (102, 202) of the two drive devices (100, 200) in a longitudinal direction (L) of the synchronization rod (5), and is held between the two pivoting members (102, 202) in a longitudinal direction (L) of the synchronization rod (5) without play, and/or
- is configured to be invariable in length, and/or
- has an identical cross-section over an entire length, and/or
- is configured as a hollow profile with an identical inner diameter over an entire length.

## Revendications

1. Dispositif de synchronisation (6) comportant au moins deux dispositifs d'entraînement (100, 200) pour déplacer une partie de meuble mobile (3) et comportant au moins une tige de synchronisation (5) pour synchroniser le mouvement des au moins deux dispositifs d'entraînement (100, 200), dans lequel une première zone d'extrémité de la tige de synchronisation (5) peut être reliée à une première partie rotative (102) du premier dispositif d'entraînement (100) et une seconde zone d'extrémité de la tige de synchronisation (5) peut être reliée à une seconde partie rotative (202) du second dispositif d'entraînement (200), dans lequel au moins un dispositif de compensation de longueur (9) est prévu, avec lequel dans un état monté de la tige de synchronisation (5), un jeu est au moins partiellement compensable dans une direction longitudinale (L) de la tige de synchronisation (5) entre les dispositifs d'entraînement (100, 200) et la tige de synchronisation (5), dans lequel au moins l'un des dispositifs d'entraînement (100, 200) présente un boîtier (103, 203) et le dispositif de compensation de longueur (9) est intégré au moins par endroits dans le boîtier (103, 203) et/ou que le dispositif de compensation de longueur (9) est intégré au moins par endroits dans la tige de synchronisation (5), **caractérisé en ce que** le dispositif de compensation de longueur (9) présente au moins un élément de compensation de jeu (24) agissant transversalement à la direction longitudinale (L) de la tige de synchronisation (5), par lequel un jeu peut être compensé transversalement à la direction longitudinale (L) de la tige de synchronisation (5), dans lequel l'au moins un élément de compensation de jeu (24) présente au moins un élément de coin (24a) avec une surface de coin (25) s'étendant obliquement par rapport à la direction longitudinale (L) de la tige de synchronisation (5).

2. Dispositif de synchronisation (6) selon la revendication 1, **caractérisé en ce qu'**au moins l'une des pièces rotatives (102, 202)
- présente au moins une denture (7), de préférence dans lequel la denture (7) présente au moins deux segments de dent (7a, 7b, 7c) disposés reposant l'un contre l'autre par couches dans la direction longitudinale (L) de la tige de synchronisation (5), et/ou
- est logée au niveau d'un arbre (8), dans lequel le dispositif de compensation de longueur (9) est intégré dans l'arbre (8), et/ou
- est intégrée dans le boîtier (103, 203) du dispositif d'entraînement (100, 200), et/ou
- présente au moins deux composants (8a, 8b) mobiles l'un par rapport à l'autre dans la direction longitudinale (L) de la tige de synchronisation (5), de préférence dans lequel les composants (8a, 8b) sont précontraints l'un par rapport à l'autre par au moins un accumulateur de force (13) et/ou sont télescopiques l'un par rapport à l'autre.

3. Dispositif de synchronisation (6) selon la revendication 1 ou 2, **caractérisé en ce que** les pièces rotatives (102, 202) présentent chacune une interface (10) pour la fixation détachable de la tige de synchronisation (5).

4. Dispositif de synchronisation (6) selon la revendication 3, dans lequel l'interface (10)
- est conçue de sorte que la tige de synchronisation (5) ne puisse être reliée à la pièce rotative (102, 202) que dans une seule position de rotation dans une plage d'angle de rotation de 360°, et/ou
- une pièce à assembler (10a) présentant un contour extérieur divergent d'une forme circulaire et une pièce de réception (21) pour recevoir la pièce à assembler (10a) par liaison de forme, de préférence dans lequel le contour extérieur présente par sections plusieurs saillies (11a, 11b, 11c, 11d) disposées sensiblement à équidistance dans le sens de rotation et au moins un aplatissement (12) ou un creux qui est disposé à la place d'une saillie (11a, 11b, 11c, 11d).

5. Dispositif de synchronisation (6) selon l'une quelconque des revendications 1 à 4, **caractérisé en ce que** le dispositif de compensation de longueur (9) présente au moins un accumulateur de force (13) agissant dans la direction longitudinale (L) de la tige de synchronisation (5).

6. Dispositif de synchronisation (6) selon l'une quelconque des revendications 1 à 5, dans lequel
- l'au moins un élément de compensation de jeu (24) est réalisé en tant qu'élément à ressort (16), de préférence dans lequel l'élément à ressort (16) est réalisé en tant que ressort à lames ou en tant que ressort hélicoïdal, et/ou
- l'au moins un élément de coin (24a) est précontraint par un élément à ressort (16) dans une direction parallèle à la direction longitudinale (L) de la tige de synchronisation (5), et/ou est logé de manière mobile dans la direction longitudinale (L) de la tige de synchronisation (5).

7. Dispositif de synchronisation (6) selon l'une quelconque des revendications 1 à 6, **caractérisé en ce que** le dispositif de compensation de longueur (9) présente au moins un levier de pivotement (14) qui peut pivoter autour d'un axe de pivotement (15) transversalement à la direction longitudinale (L) de la tige de synchronisation (5) entre une position de desserrage et une position d'arrêt.

8. Dispositif de synchronisation (6) selon les revendications 6 et 7, **caractérisé en ce que** l'élément à ressort (16) s'appuie au moins dans la position d'arrêt du levier pivotant (14) contre le levier pivotant (14).

9. Dispositif de synchronisation (6) selon l'une quelconque des revendications 1 à 8, **caractérisé en ce que** le dispositif de compensation de longueur (9) présente au moins deux pièces de liaison (8c, 8d) qui sont logées de manière mobile l'une par rapport à l'autre dans la direction longitudinale (L) de la tige de synchronisation (5), de préférence de manière limitée.

10. Dispositif de synchronisation (6) selon la revendication 9, **caractérisé en ce que**
- l'une des pièces de liaison (8c, 8d) présente un contour extérieur avec une surface inclinée (18a, 18b), de préférence deux surfaces inclinées (18a, 18b), et l'autre des pièces de liaison (8c, 8d) présente un contour intérieur avec une contre-forme correspondante (19a, 19b), et/ou
- l'une des pièces de liaison (8c, 8d) présente un contour extérieur en forme d'hexagone, et/ou
- les pièces de liaison (8c, 8d) sont logées de manière mobile dans une direction transversalement à la direction longitudinale (L) de la tige de synchronisation (5), de préférence de manière limitée.

11. Dispositif de synchronisation (6) selon l'une quelconque des revendications 1 à 10, **caractérisé en ce que** la tige de synchronisation (5) présente au moins une cavité (23) au niveau d'au moins une des zones d'extrémité et le dispositif de compensation de longueur (9) est disposé au moins par sections dans la cavité (23), de préférence dans lequel le dispositif de compensation de longueur (9) comporte au moins un premier accumulateur de force (13) agissant dans la direction longitudinale (L) de la tige de synchronisation (5) et l'accumulateur de force (13) est disposé au moins par sections dans la cavité (23) de la tige de synchronisation (5).

12. Dispositif de synchronisation (6) selon l'une quelconque des revendications 1 à 11, **caractérisé en ce qu'**au moins un élément de recouvrement (20a, 20b) est prévu, lequel est disposé de manière mobile dans la direction longitudinale (L) de la tige de synchronisation (5) par rapport à la tige de synchronisation (5) et est conçu pour recouvrir une des zones d'extrémité de la tige de synchronisation (5).

13. Dispositif de synchronisation (6) selon l'une quelconque des revendications 1 à 12, **caractérisé en ce que** le dispositif de compensation de longueur (9) est disposé au niveau d'une seule des zones d'extrémité sur la tige de synchronisation (5).

14. Dispositif de synchronisation (6) selon l'une quelconque des revendications 1 à 13, **caractérisé en ce que** le dispositif de compensation de longueur (9) est relié ou peut être relié par friction à la tige de synchronisation (5).

15. Dispositif de synchronisation (6) selon l'une quelconque des revendications 1 à 14, **caractérisé en ce qu'**au moins l'un des dispositifs d'entraînement (100, 200) présente au moins un bras de réglage (101) rotatif autour d'au moins un premier axe de rotation pour déplacer la partie de meuble (3) logée de manière mobile par rapport au boîtier (103, 203), dans lequel la partie rotative (102, 202) du dispositif d'entraînement (100, 200) est disposée en déport latéral par rapport au premier axe de rotation du bras de réglage (101, 201).

16. Dispositif de synchronisation (6) selon l'une quelconque des revendications 1 à 15, **caractérisé en ce que** la tige de synchronisation (5)
- peut également être reliée de manière détachable aux pièces rotatives (102, 202) des dispositifs d'entraînement (100, 200) lorsque les dispositifs d'entraînement (100, 200) sont déjà prémontés, de préférence au niveau d'un corps de meuble (2), et/ou
- dans un état relié, est reliée sans pouvoir tourner aux pièces rotatives (102, 202) des dispositifs d'entraînement (100, 200), et/ou
- est précontrainte par le dispositif de compensation de longueur (9) entre les deux pièces rotatives (102, 202) opposées des deux dispositifs d'entraînement (100, 200) avec une force de maintien prédéfinie dans la direction longitudinale (L) de la tige de synchronisation (5) par rapport aux deux pièces rotatives (102, 202) des dispositifs d'entraînement (100, 200) et maintenue sans jeu entre les deux pièces rotatives (102, 202) dans la direction longitudinale (L) de la tige de synchronisation (5), et/ou
- est de forme invariable en longueur, et/ou
- présente une même section transversale sur toute sa longueur, et/ou
- est réalisée sur toute une longueur en profilé creux de même diamètre intérieur.
